# EUROPÄISCHE PATENTANMELDUNG

(11) **EP 1 142 752 A1**
(43) Veröffentlichungstag der Anmeldung: **10.10.2001**
(21) Anmeldenummer: 01108294.8
(22) Anmeldetag: 02.04.2001
(51) Int. Cl.: B60N 2/28

(54) **Sitz zum Aufstellen auf einen Kraftfahrzeugsitz**

(30) Priorität: 06.04.2000 DE 20006227 U
(71) Anmelder: Kiddy GmbH Autokindersitze, 07356 Thimmendorf /Thr. (DE)
(72) Erfinder: Würstl, Jan Stefan, 95145 Oberkotzau (DE)
(74) Vertreter: Eichstädt, Alfred, Dipl.-Ing.

(57) **Zusammenfassung**

Bei einem Sitz für Kinder oder Puppen zum Aufstellen auf einen Kraftfahrzeugsitz ist am Sitzteil (1) im hinteren Bereich ein Aufstellsicherungsbügel (8) angelenkt, dessen Schenkellängen derart bemessen und dessen Lager derart beabstandet zum Aufstellboden (2) hochgelegt sind, daß der die Schenkel verbindende Brückenteil (10) im heruntergeklappten Zustand des Aufstellsicherungsbügels (8) mit seiner Unterseite in Verlängerung des vorderen Flächenabschnitts (3) des Aufstellbodens (2) eine Aufstellfläche bildet. Der Aufstellbügel (8) ist in eine hintere Position verschwenkbar, in der der Brückenteil (10) als Stützfläche sich an die Rückenlehne des Kraftfahrzeugsitzes anlegt und den Sitzteil so weit vorschiebt, daß der hintere Flächenabschnitt (4) durch Schwerpunktverlagerung des Sitzes durch die in eine schräge Lage dabei verbrachte Rückenlehne (5) auf der Sitzfläche des Kraftfahrzeugsitzes aufliegt.

## Beschreibung

Die Erfindung betrifft einen Sitz zum Aufstellen auf einen Kraftfahrzeugsitz, insbesondere einen Kinder- oder Puppensitz.

Bei einem gattungsgemäßen Sitz ist es bekannt, im hinteren Bereich des Sitzteils eine schwenkbare Sitzerhöhung vorzusehen, die in einer ersten Stellung als längserstreckender Bügelteil unter dem Sitz querverlaufend sich erstreckt und den Sitz um das definierte Höhenmaß des Bügelteils anhebt, während der Sitzteil mit einem vorderen, wulstartig sich nach unten erstreckenden Ansatz auf dem Kraftfahrzeugsitz aufliegt. In einer zweiten Stellung ist die Sitzerhöhung nach hinten verschwenkt. In dieser Position liegt sowohl die wulstförmige Unterseite des vorderen Bereiches des Sitzteiles als auch das hintere Übergangsteil zwischen Sitzteil und Rückenteil auf dem Kraftfahrzeugessitz auf. Der Sitzteil nimmt in dieser Position eine Schräglage ein und damit der gesamte Sitz, der Sitz befindet sich dann in einer Ruhestellung.

Aus der DE 298 16 591 U1 ist ein Sitz für Kinder oder Puppen bekannt, der einen Sitzteil, Seitenteile, eine Rückenlehne und mindestens eine Bein/Fußstütze am vorderen Ende des Sitzteiles aufweist, die sich nach unten erstreckt und mindestens an einem Seitenteil eine sich nach oben erstreckende Tragevorrichtung, mit einem sich wenigstens teilweise über den Sitzteil erstreckenden Griffelement, aufweist. Die Tragevorrichtung ist quer zum Sitzteil verlaufend, schwenkbeweglich an dem Seitenteil oder an einer daran befestigten Lagerwand angelenkt und in verschiedene Schwenkpositionen in Bezug auf die Ebene des Sitzteils verbringbar und arretierbar. Sie ist darüber hinaus in eine hintere Position verschwenkbar, in der sie gewissermaßen die hinteren Stuhlbeine bildet. Dadurch ist es möglich, den Sitz sowohl in die Aufstellposition als auch in beliebige Schräglagen zu verbringen.

Aus der DE 42 08 599 C2 ist ein Babyträger mit einem in verschiedene Neigungsverstellungen positionierbaren Schalensitz und mit einem Tragebügel bekannt, welcher mit zumindest einem Schenkel mittels zumindest eines Halteschwenkgelenkes mit einem Schalensitz verbunden ist, in dem der Schenkel des Tragebügels an einer in der Seitenwand des Schalensitzes befestigten Schwenkachse angelenkt und mittels eines radial zur Schwenkachse beweglichen, mit dem Tragebügel verschwenkbaren, und in einer der Seitenwand des Schalensitzes zugeordneten Ausnehmung eingreifbaren Ansatzes in der Tragestellung arretierbar ist. Dieser Tragebügel läßt sich auch in eine hintere untere Verschwenkposition bringen und bildet hierin einen Aufstellsicherungsbügel, um den Babyträger auf einer ebenen Fläche, z. B. einen Kraftfahrzeugsitz, aufstellen zu können.

Aus der DE 34 39 679 A1 ist ein Babyträger bekannt, der an der Unterseite ein einstückiges Paar Kufen mit einer keilförmigen Tasche aufweist, die abnehmbar zwischen den Kufen befestigt ist. Dieser Babyträger weist zum Aufstellen und Sichern desselben einen Aufstellsicherungsbügel auf, der aus der Unterseite nach hinten vorklappbar ist und so beim Aufstellen des Babyträgers auf einer ebenen Fläche Aufstellpunkte bildet, die im wesentlichen im hinteren Bereich der Rückenlehne enden.

Aus der DE 94 05 574 U1 ist ein Fahrradsitz bekannt, der an der Rückseite der Rückenlehne einen Trage-Schiebegriff aufweist, der als Aufstellsicherungsbügel zur Bildung hinterer Stützpunkte auf einer Stützfläche nach hinten schwenkbar ist und mittels Getriebesperre in dieser Position gehalten wird. Dadurch ist es möglich, den Sitz in verschiedene Schrägstellungen verbracht auch auf einer Standfläche aufzustellen.

Ausgehend vom bekannten Stand der Technik liegt der Erfindung die Aufgabe zugrunde, einen Sitz der gattungsgemäßen Art so weiterzubilden, daß er - aufgestellt auf einem Kraftfahrzeugsitz - auf einfache Art und Weise aus einer ersten Sitzstellung (aufrechte Stellung) in eine zweite Stellung, Ruhe- bzw. Relaxstellung, in vorgerückter Position des Sitzteils und bei entsprechender Neigungsverstellung der Rückenlehne verbringbar ist, wobei gleichzeitig beim Verbringen in die Ruheposition die Vorderkante des Sitzteiles sich erhöhen soll.

Die Erfindung löst die Aufgabe durch Ausgestaltung eines Sitzes zum Aufstellen auf einen Kraftfahrzeugsitz mit den im Anspruch 1 und im nebengeordneten Anspruch 10 angegebenen Merkmalen. Gemäß Anspruch 13 ist es ein Sitz für Kinder- oder Puppen.

Gemäß der Lehre der Erfindung besteht der Aufstellboden des Sitzteils aus zwei im wesentlichen stumpfwinkelig zueinander verlaufend angeordneten Flächenabschnitten. Anstelle solcher Flächenabschnitte können aber auch - ähnlich wie Kufen - seitlich verlaufende Aufstellrippen vorgesehen sein, die ebenfalls stumpfwinkelig zueinander verlaufen und beispielsweise beidseitig am Sitz unten vorgesehen sind. Es ist ersichtlich, daß der Sitz durch Druck auf die Vorderkante zur Auflage auf dem Kraftfahrzeugsitz mit dem vorderen Abschnitt gelangt und daß durch die leicht schräggestellte Rückenlehne, die entweder fest oder schwenkbar damit verbunden ist, beim Loslassen durch die Schwerpunktlage des Sitzes automatisch auf den hinteren Flächenabschnitt kippt, wenn der Sitz vorgezogen wird. Dies ist zwangsläufig durch die stumpfwinkelige Anordnung der beiden Flächenabschnitte gegeben.

Die Erfindung macht sich nun diesen Umstand zunutze, um den Sitz aus einer aufrechten Sitzposition in eine leichte schräge Ruheposition auf einfache Weise verstellen zu können. Sie bedient sich dabei gemäß Anspruch 1 eines Aufstellsicherungsbügels, der gewissermaßen als Sitzerhöhung unter den hinteren Flächenabschnitt dann verschwenkt wird, wenn der Sitz in eine Aufstellposition verbracht wird. Die Standkräfte werden auf das Schwenklager des Aufstellsicherungsbügels übertragen. Der Brückenteil des Aufstellsicherungsbügels bildet in dieser Position praktisch eine Verlängerung des vorderen Flächenabschnittes des Aufstellbodens des Sitzteiles. Der vordere Flächenabschnitt und der Brückenteil stehen also auf der Sitzfläche auf. Die vordere Sitzkante des Sitzteiles wird dabei um das durch den stumpfwinkeligen Verlauf des vorderen Flächenabschnittes gegebene Höhenmaß abgesenkt.

Soll der Sitz in eine Liegestellung, in eine sogenannte Relaxstellung, verbracht werden, so wird. er lediglich vorgezogen und der Aufstellsicherungsbügel nach hinten verschwenkt. Er vergrößert und definiert damit den Abstand des Sitzteiles zur Rückenlehne des Kraftfahrzeugsitzes, an welcher sich der Brückenteil des Sicherungsbügels abstützt. Die Schenkel des Aufstellbügels sind so lang gebildet, daß der hintere Flächenabschnitt des Sitzteiles auf der Oberfläche des Kraftfahrzeugsitzes aufsteht. Durch die bedingte Schräglage wird die Schwerpunktachse querverlaufend zum Sitz nach hinten verschoben. Die Rückenlehne liegt also nur im oberen Bereich an. Zur Anpassung kann diese im oberen Bereich eine Abschrägung aufweisen, so daß sie mit einem Flächenabschnitt an der Rückenlehne des Fahrzeugsitzes anliegt. Der Aufstellsicherungsbügel stützt sich mit dem breitflächigen Brückenteil an der Fahrzeugsitzrückenlehne ab. In dieser Position ist die vordere Sitzkante des Sitzes automatisch durch den aufliegenden hinteren Flächenabschnitt des Aufstellbodens angehoben.

Diese Funktion kann gemäß der Lehre des Anspruchs 10 auch dadurch erreicht werden, daß der hintere Flächenabschnitt des Aufstellbodens abklappbar angeordnet ist. Zum Verbringen in eine gerade Aufstellposition des Sitzes wird dieser abklappbare Teil nach unten geschwenkt und bildet dabei eine im wesentlichen geradförmige Verlängerung zum vorderen Abschnitt. Der Sitz steht also großflächig auf dem Fahrzeugsitz auf. Zum Zwecke der Verbringung des Sitzes in eine Ruheposition bzw. Relaxposition wird der hintere Abschnitt wieder hochgeklappt, so daß ein Neigungswinkel durch die stumpfwinkelige Anordnung gegeben ist und der Sitz mit dem hinteren Abschnitt aufsteht.

Um eine Abstandsstütze zu erzielen, können an der Rückseite ausziehbare Stützteile vorgesehen sein, die um das Maß des Vorziehens herausgezogen werden. Sie bilden dann eine Abstütze an der Rücklehne des Fahrzeugsitzes, die im Falle der Ausbildung nach Anspruch 1 durch den Aufstellsicherungsbügel realisiert ist. Im Fall, daß auch der vordere Abschnitt abklappbar ausgeführt ist, ist es darüber hinaus möglich, auch in der Schrägstellung die gesamte Fläche des Aufstellbodens auf dem Fahrzeugsitz zu sichern. Zu diesem Zweck wird der vordere Abschnitt in der Liegeposition ebenfalls nach unten geklappt und durch entsprechende Fixiervorrichtungen, die lösbar sind, in der Position gehalten. Gleichzeitig ist dennoch die Oberkante des Sitzes nach oben verstellt.

Sowohl an dem schwenkbaren Aufstellsicherungsbügel nach Anspruch 1 als auch bei der abklappbaren Version des hinteren Flächenabschnittes nach Anspruch 10 ist es möglich, an diesen Elementen Fixierelemente vorzusehen, die mit Fixpunkten des Sitzes verbindbar sind, um damit sogenannte Isofix-Verbindungen herstellen zu können. Der Sitz ist also sowohl in der Sitzposition als auch in der Ruheposition über Befestigungseinrichtungen an dem Aufstellsicherungsbügel oder an dem abklappbaren hinteren Flächenabschnitt des Aufstellbodens mit solchen Fixpunkten des Fahrzeugsitzes verbindbar.

Vorteilhafte Weiterbildungen der Erfindung sind in den Unteransprüchen im einzelnen selbsterklärend angegeben.

Durch ein hohes Gewicht des Aufstellsicherungsbügels und bei großflächiger Ausbildung des Brückenteils ist eine Arretierung des Aufstellsicherungsbügels in den verschiedenen Stellpositionen nicht erforderlich. Darüber hinaus wird durch einfaches Anheben des Sitzes bewirkt, daß dieser aus einer Relaxposition automatisch in eine Aufstellposition verbracht wird, da der Bügel dann automatisch unter den hinteren Flächenabschnitt schwenkt.

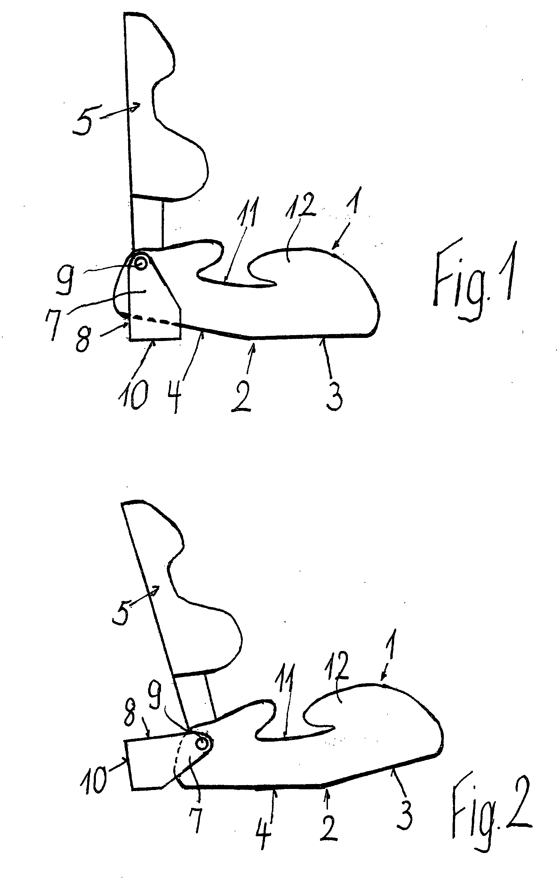

Die Erfindung wird nachfolgend anhand der in der Zeichnung dargestellten Figuren 1 und 2 ergänzend erläutert.

In den Figuren ist ein Kindersitz dargestellt, der aus einem Sitzteil 1 und einer Rückenlehne 5 besteht, die fest an dem Sitzteil 1 befestigt, jedoch in der Höhe zur Anpassung der Rückenstütze an die Länge des Körpers des Kindes verstellbar ist. Die fotoperspektivischen Darstellungen zeigen ferner, daß der Aufstellboden 2 aus einem vorderen Flächenabschnitt 3 und einen hinteren Flächenabschnitt 4 besteht, die geradlinig ausgebildet, jedoch stumpfwinkelig im mittleren Bereich zusammengefügt sind. Diese erfindungsgemäße Ausgestaltung, die auch durch einen Bogen ersetzbar ist, ermöglicht, daß der Sitz zum einen auf dem vorderen Flächenabschnitt aufstellbar ist und zum anderen auf den hinteren Flächenabschnitt, je nachdem, wie die Gewichtsverlagerung des Sitzes und damit die Schwerpunktverschiebung gegeben ist.

Zum Verbringen des Sitzes in eine aufrechte Sitzposition ist ein Aufstellsicherungsbügel 8 mit Seitenschenkeln 7 an dem Sitzteil mittels des Lagers 9 angelenkt. Der Aufstellsicherungsbügel weist einen großflächigen Brückenteil 10 und ein relativ hohes Eigengewicht auf, so daß allein beim Anheben des Sitzes der Aufstellsicherungsbügel mit seinem Brückenteil 10 unter den hinteren Flächenabschnitt schwenkt. Die Länge der Schenkel 7 ist dabei so bemessen, daß - wie aus Figur 1 ersichtlich - die Unterseite des Brückenteils 10 eine Aufstellfläche bildet, die in Verlängerung zu dem vorderen Flächenabschnitt 3 des Sitzteiles verläuft, so daß beim Aufstellen des Sitzes auf einen Fahrzeugsitz eine feste Standfläche gegeben ist. Es ist dabei noch nicht einmal notwendig, den Aufstellsicherungsbügel in dieser Position zu arretieren. Das Gewicht reicht dabei zum sicheren Stand aus. Das Lager 9 ist im übrigen in Höhe des Ansatzes 6 der Rückenlehne 5 vorgesehen. Zur Sicherung des Kindersitzes auf einem Kraftfahrzeugsitz weist der Sitzteil ferner Führungen 11 für einen querverlaufenden Beckengurt auf. Diese Führungen sind in den Seitenwänden 12, die den Sitzteil seitlich begrenzen, eingearbeitet.

Aus der Darstellung in Figur 2 ist ersichtlich, daß der Sitz zum Verbringen in eine Schrägposition, nämlich eine Ruhe- oder Relaxposition für das Kind, einfach nach vorne gezogen wird. Der Aufstellsicherungsbügel 8 wird dabei in die dargestellte Schwenkposition nach hinten verbracht. Der Sitz steht also nur noch mit dem hinteren Flächenabschnitt auf dem Sitz auf. Der Schwerpunkt ist durch die Schräglage der Rückenlehne nach hinten verschoben. Der Rückenteil stützt sich an der Rückenlehne des Kraftfahrzeugsitzes ab und bildet so den notwendigen Abstand, um die Ruheposition abzusichern. Der Sitz vorne ist in dieser Position angehoben.

## Patentansprüche

1. Sitz zum Aufstellen auf einen Kraftfahrzeugsitz, aufweisend:
- ein Sitzteil (1) mit einem Aufstellboden aus einem vorderen und einem hinteren, im wesentlichen geradförmigen Flächenabschnitt (3, 4),
- die im mittleren Bereich des Sitzteiles (1) stumpfwinkelig oder wippenförmig durchgebogen zusammenlaufen,
- einer am Sitzteil (1) im hinteren Bereich befestigten Rückenlehne (5),
- einem im hinteren Bereich des Sitzteils (1) oder im Ansatzbereich (6) der Rückenlehne (5) am Sitzteil (1) mit seitlichen Schenkeln (7) angelenkten Aufstellsicherungsbügel (8),
- dessen Schenkellängen derart bemessen und dessen Lager (9) derart beabstandet zum Aufstellboden (2) hochgelegt sind, daß der die Schenkel (7) verbindende Brückenteil (10) im heruntergeklappten Zustand des Aufstellsicherungsbügels (8) mit seiner Unterseite in Verlängerung des vorderen Flächenabschnitts (3) des Aufstellbodens (2) eine Aufstellfläche bildet,
- wobei der Brückenteil (10) derart großflächig ausgebildet ist, daß eine Selbstausrichtung des Aufstellsicherungsbügels (8) mit hoher Standfestigkeit gegeben ist, und
- der Aufstellsicherungsbügel (8) in eine hintere Position verschwenkbar ist, in der der Brückenteil (10) als Stützfläche sich an die Rückenlehne des Kraftfahrzeugsitzes anlegt und den Sitzteil (1) so weit vorschiebt, daß der hintere Flächenabschnitt (4) durch Schwerpunktverlagerung des Sitzes durch die in eine schräge Lage dabei verbrachte Rückenlehne (5) auf der Sitzfläche des Kraftfahrzeugsitzes aufliegt.

2. Sitz nach Anspruch 1, **dadurch gekennzeichnet, daß** der Aufstellsicherungsbügel (8) ein solches Gewicht aufweist, **daß** er beim Anheben des Sitzteiles (1) oder des Sitzes über die Rückenlehne (5) automatisch nach unten unter den hinteren Flächenabschnitt (4) schwenkt.

3. Sitz nach Anspruch 1 oder 2, **dadurch gekennzeichnet, daß** mindestens ein Schenkel (7) an dem Lager durch eine lösbare Verbindung mindestens in der heruntergeschwenkten Stellung und/oder der nach hinten verschwenkten Stellung gesichert ist.

4. Sitz nach Anspruch 1 oder 2, **dadurch gekennzeichnet, daß** mit mindestens einem der Schenkel (7) eine Arretiervorrichtung gekoppelt ist, die mit Elementen am Lager (9) oder am Sitzteil (1) derart zusammenwirkt, **daß** der Aufstellsicherungsbügel (8) in der heruntergeklappten Position und/oder in der nach hinten geschwenkten Position fixiert ist und eine Entriegelungsvorrichtung zur Freigabe des Aufstellsicherungsbügels (8) aufweist.

5. Sitz nach Anspruch 4, **dadurch gekennzeichnet, daß** Rastverbindungen zur Arretierung vorgesehen sind.

6. Sitz nach Anspruch 1, **dadurch gekennzeichnet, daß** die Rückenlehne (5) am Sitzteil (1) in verschiedene Schrägstellungen verbringbar angelenkt und in den eingenommenen Schrägstellungen arretierbar ist.

7. Sitz nach Anspruch 1, **dadurch gekennzeichnet, daß** das Sitzteil (1) Führungen (11) in den Seitenwänden (12) für einen Beckengurt eines Kraftfahrzeugsitzes aufweist.

8. Sitz nach Anspruch 1, **dadurch gekennzeichnet, daß** die Rückenlehne (5) starr mit dem Sitzteil (1) verbunden ist.

9. Sitz nach einem der Ansprüche 1 bis 3, **dadurch gekennzeichnet, daß** an dem Aufstellsicherungsbügel (8) Befestigungseinrichtungen zur lösbaren Fixierung des Bügels (8) an Fixpunkten des Fahrzeugsitzes vorgesehen sind.

10. Sitz zum Aufstellen auf einen Kraftfahrzeugsitz, aufweisend:
- ein Sitzteil (1) mit einem Aufstellboden aus einem vorderen und einem hinteren, im wesentlichen geradförmigen Flächenabschnitt (3, 4),
- die im mittleren Bereich des Sitzteiles (1) stumpfwinkelig oder wippenförmig durchgebogen zusammenlaufen,
- einer am Sitzteil (1) im hinteren Bereich befestigten Rückenlehne (5),
**dadurch gekennzeichnet, daß** der hintere Flächenabschnitt (4) schwenkbeweglich im mittigen Bereich des Aufstellbodens im Sitzteil (1) oder am vorderen Flächenabschnitt (3) angelenkt ist und **daß** Arretierungseinrichtungen vorgesehen sind, die den hinteren Flächenabschnitt (4) in einer ersten stumpfen Winkelstellung zum vorderen Flächenabschnitt (3) und in mindestens einer zweiten Stellung, in der sie eine gerade Verlängerung zum vorderen Flächenabschnitt (3) bilden, fixieren.

11. Sitz nach Anspruch 10, **dadurch gekennzeichnet, daß** aus der Rückseite des Sitzteiles vorziehbar an dem klappbaren hinteren Flächenabschnitt (4) Befestigungseinrichtungen zur lösbaren Fixierung des Sitzes an Fixpunkten des Kraftfahrzeugsitzes vorgesehen sind.

12. Sitz nach Anspruch 10 oder 11, **dadurch gekennzeichnet, daß** auch der vordere Flächenabschnitt (3) im Fahrzeugsitz oder an dem hinteren Flächenabschnitt (4) mit der vorderen Seite abklappbar angelenkt und in der abgeklappten und hochgestellten Stellung jeweils fixiert ist.

13. Sitz nach einem der vorhergehenden Ansprüche, **dadurch gekennzeichnet, daß** es ein Sitz für Kinder oder Puppen ist.
